# EUROPEAN PATENT SPECIFICATION

(11) **EP 4 055 364 B1**
(45) Date of publication and mention of the grant of the patent: **08.05.2024**
(21) Application number: 21880686.7
(22) Date of filing: 17.05.2021
(51) Int. Cl.: G01N 3/56, B60C 11/24, F16C 41/00, F16D 66/02, G01M 5/00

(54) **RFID-BASED WEAR SENSING AND MONITORING SYSTEM**
VERSCHLEISS- UND ÜBERWACHUNGSSYSTEM AUF RFID-BASIS
SYSTÈME DE DÉTECTION ET DE SURVEILLANCE D'USURE BASÉ SUR LA RFID

(30) Priority: 16.10.2020 TR 202016546
(43) Date of publication of application: 14.09.2022
(73) Proprietor: COLAKOGLU MUHENDISLIK MAKINA SANAYI VE TIC. LTD. STI., Arsin/Trabzon (TR)
(72) Inventor: OZCELEBI, Kubilay, Ortahisar/Trabzon (TR); ITIK, Mehmet, Karabaglar/Izmir (TR); DUMAN, Ibrahim Can, Ortahisar/Trabzon (TR)
(74) Representative: Sevinç, Cenk
(86) International application number: PCT/TR2021/050465
(87) International publication number: WO 2022/081109

(56) References cited:
- EP-A1- 2 995 474
- DE-A1-102008 032 818
- DE-B3-102014 112 868
- US-A1- 2007 252 719
- US-A1- 2012 167 661
- US-A1- 2015 197 399

## Description

### Related Technical Field of the Invention:

The present invention relates to a system for monitoring wear state of the wear plates which are positioned on the equipment exposing to the physical and mechanical wear and which aims to prolong the lifespan of the equipment.

### State of the Art:

Factors such as impact, corrosion and friction occurring on the portion, where the raw material strikes on the equipment surface, while granular or solid particulate materials flow causes wear on the equipment surface.

Nowadays, interior surface of equipment is coated with replaceable plates, which can be manufactured from various materials, so that the main structure of equipment is not worn. The fact that the interior surface of the equipment is coated may ensure to prolong the lifespan of the equipment, however plates worn over time in different thickness and sizes should be replaced. Furthermore, continuously reaching and accessing inside of the equipment and examining wear states of the wear plates constitute a drawback.

In the state of the art, the patent document numbered "US2017184169A1" subject to the application, it is provided a wear indicator arranged on the real friction lining and preferably embedded therein. The invention is a real sensor that detects wear state of the friction lining and configured, such that it senses the wear state continuously or at least in a slightly-increasing manner. As the friction lining wears more, the conductor tracks are gradually interrupted and an appertaining signal generated by the receiver-transmitter unit located in the wear indicator is received and displayed by a control unit and/or reading device that is installed in the vehicle or located externally. The transmission technology preferred according to the invention is the so-called RFID (radio frequency identification) technology and especially SAW (surface acoustic wave) technology.

In the state of the art, the patent document numbered "US2017003208A1" subjected to the application comprises a sensor, an outer body and a sensor to detect and indicate wear to the outer body. The outer body exhibits an opening extending at least partially through it and the sensor is positioned within the gap.

In the state of the art, the patent document numbered "TR201903671" subjected to the application ensures to determine the abrasion resistance of at least one wear layer arranged on a carrier plate in an off-line manner, which is at the out of the production line of carrier plate.

In the state of the art, the patent document numbered "DE 10 2014 112868 B3" subjected to the application relates to a brake shoe for disk or drum brakes, which comprises a supporting plate with a friction pad attached thereto and at least one wear indicator. The wear indicator has a wear sensor for continuous or multi-stage measurement of the wear of the friction lining and a receiver and transmitter unit for wireless signal transmission, the receiver and transmitter unit being a passive RFID (Radio Frequency Identification) or SAW (Sound Acoustic Wave) transponder.

In the state of the art, there are various wired and wireless approaches to monitor lifespans of the wear plates. In wired ones, it is required to install a cabling system to each sensor, that is, to each wear plate to be measured in terms of wear. Therefore, it is required to use more equipment, thereby causing to a difficult assembly due to complexed cabling. Furthermore, it is inevitable to avoid damages to the cabling during the operation. In wireless ones, complexed electronic circuits are needed in the sensor and said circuits are required to be connected with a power supply to receive and transmit signals. And this leads that the wear monitoring sensor has a certain lifespan.

In the state of the art, there are applications that perform wear monitoring by means of RFID tag. In such application, RFID sensor is embedded in the wear plate. This process is both laborsome and the signal sensitivity between the RFID tag and the reader is weakened due to the metal effect. Furthermore, RFID tags should be protected against impacts.

In the state of the art, there is no system that is able to monitor the wear state that may occur on the wear plates in a wireless manner by means of passive RFID tag out of the sensor and wear plates operation through a mechanism mounted on the wear plate.

Consequently, An improvement is necessary to be made to overcome the abovementioned disadvantages and the inadequacy of recent solutions in eliminating these disadvantages in the related technical field.

### Object of the Invention:

The most important object of the present invention is to provide a system for monitoring wear state of the wear plates which are positioned on the equipment exposing to the physical and mechanical wear and which aims to prolong the lifespan of the equipment.

Another important object of the present invention is to decrease the additional cost and complexity resulting from the cabling.

Another important object of the present invention is to provide ease of mounting.

Another important object of the present invention is to prevent possible signal losses due to metal, because RFID tags will be on outer side of the wear plate.

Another object of the present invention is to eliminate the need for the power supply, such as cell battery or battery, through complexed electronic circuits on the sensor for the purpose of data exchange and signal transmission.

The subject matter invention's structural features and characteristics and its all advantages will be understood clearly by means of the figures given below and the detailed description provided with references to the figures. Therefore, assessment should be done by taking these figures and detailed description into consideration.

### Description of the Figures:

**Figure -1;** an isometric view of the inventive wear sensing system.
**Figure -2;** a sectional view of the inventive wear sensing system.
**Figure -3;** an isometric view of components of the inventive wear sensing system.
**Figure -4;** an isometric view of the inventive wear sensing system.

### Reference Numbers:

**100.** Wear sensing system
**101.** Housing
**102.** Tag housing
**103.** Radio frequency identification tag
**104.** Trigger mechanism
   **114.** Needle
   **115.** Spring
**200.** Wear plate
**300.** Tag reader and antenna system

### Description of the invention

The present invention relates to a system for monitoring wear state of the wear plates which are positioned on the equipment exposing to the physical and mechanical wear and which aims to prolong the lifespan of the equipment.

The inventive wear sensing system (100) comprises a housing (101), a tag housing (102), a radio frequency identification tag (103) and a trigger mechanism (104).

The inventive wear sensing system (100) can be mounted on the wear plate (200) directly or through a nut.

Said wear plate (200) is mounted on equipment, which are exposed to physical and mechanical wear, and ensures to prolong the lifespan of the equipment.

The housing (101) is mounted on the wear plate (200) and is worn simultaneously together with the wear plate (200). Further, the housing (101) ensures to attach the trigger mechanism (104) therein and the tag housing (102) thereon.

Said tag housing (102) is affixed on the housing (101) and ensures to attach the radio frequency identification tag (103) thereon. The tag housing (102) keeps the radio frequency identification (103) distant from the metal environment. The tag housing (102) is manufactured from a material such as plastic or polyamide.

Tag reader and antenna system (300) reads the radio frequency identification (RFID) tag (103) and performs the signal exchange. The tag reader and antenna system (300) provides a warning that the wear has reached up a critical level, when it cannot receive a signal from the radio frequency identification tag (103).

The radio frequency identification tag (103) carries out the signal exchange with the tag reader and antenna system (300). The radio frequency identification tag (103) is activated by the signal received from the tag reader and antenna system (300) and sends back a signal and carries out the reading process. Since the radio frequency identification tag (103) is a passive tag, it does not require any power supply.

Trigger mechanism (104) is activated, when the wear occurring in the housing (101) reaches a critical level, and further comprises a metal needle (114) to break the radio frequency identification tag (103) and a metal spring (115) to operate the needle (114). The trigger mechanism (104) ensures that the spring (115) is released and the needle (114) breaks the radio frequency identification tag (103), when the wear reaches a predetermined critical level. The trigger mechanism (104) is manufactured from a material such as metal, polyamide or castermid. The trigger mechanism (104) is positioned in the tag housing (102) in a proper distance based on the critical wear point of the wear plate (200). The distance may vary based on the thickness of the wear plate (200).

In an embodiment of the present invention, said system is mounted on the wear plate (200) directly or by means of a nut. The system comprises a metal housing (101), wherein the trigger mechanism (104) is to be positioned and on which the tag housing (102) is to be positioned. Said housing (101) is mounted on the wear plate (200) and is exposed to the physical wear together with the wear plate (200). When the wear does not reach a critical level, the tag reader and antenna system (300) is able to receive a signal from the passive radio frequency identification tag (103) and thus, it will be understood that the wear does not reach a critical level. When the wear reaches a predetermined critical level, the mechanism is activated, and the metal needle (114) damages the radio frequency identification tag (103). Since it is not possible to receive a signal from the damaged radio frequency identification tag (103), it will be detected that the wear occurring on the wear plate (200) reaches a critical level and a warning will appear on the monitoring device.

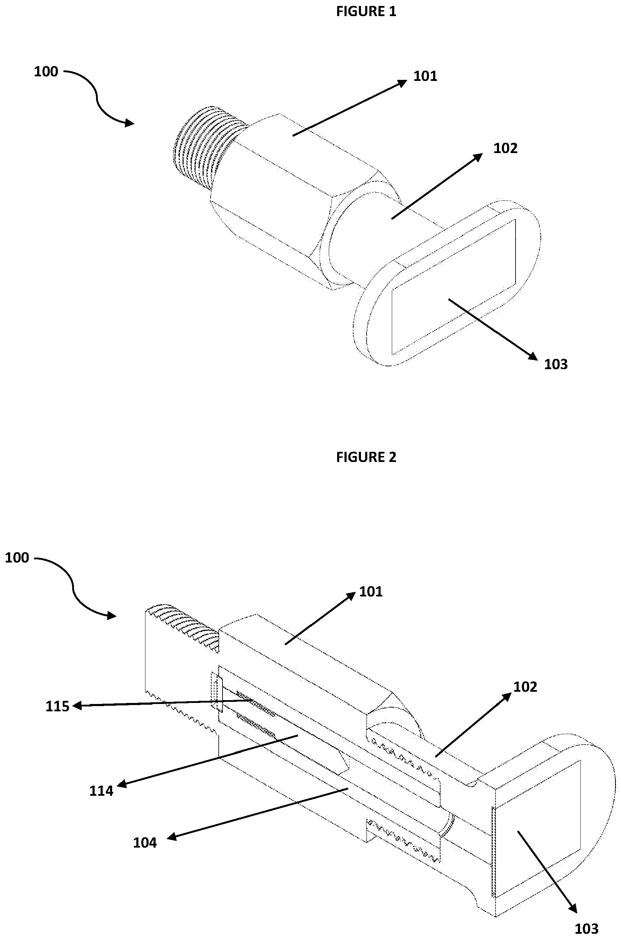

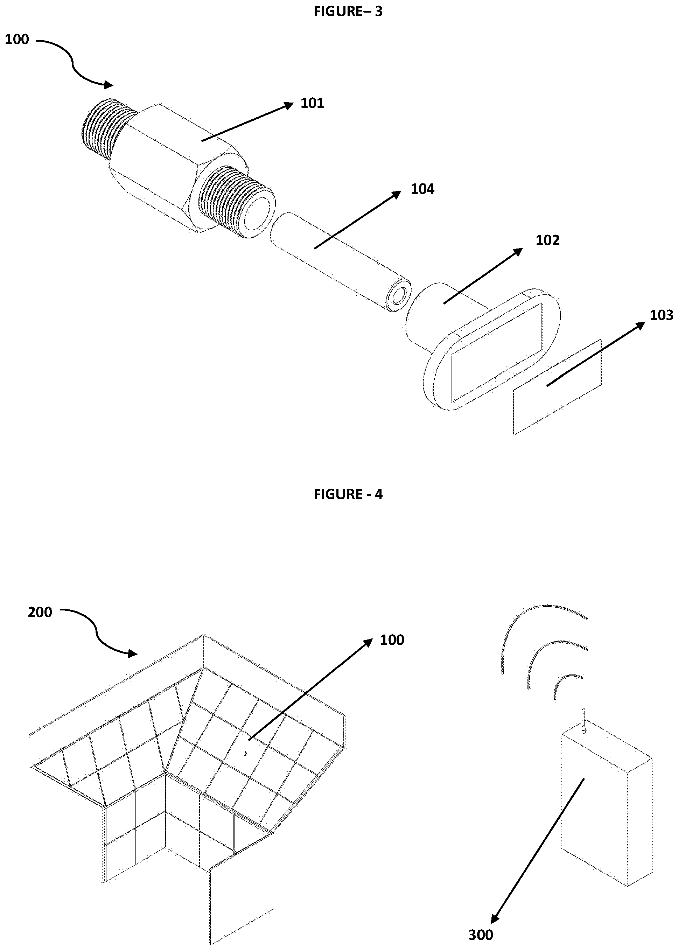

## Claims

1. A system for monitoring wear state of the wear plates which are positioned on the equipment exposing to the physical and mechanical wear and which aims to prolong the lifespan of the equipment, comprising the following;
- **at least one housing (101),** which is mounted on the wear plate (200) and is worn simultaneously together with the wear plate (200),
- **at least one tag housing (102),** which is affixed on the housing (101) and ensures to attach at least a radio frequency identification tag (103) thereon,
- said **at least one radio frequency identification tag (103),** gives a signal to carry out the signal exchange with the tag reader and antenna system (300), - a wear plate (200), that ensures to prolong the lifespan of the equipment as it is mounted on the equipments those are exposed to physical and mechanical wear
- at least a tag reader and antenna system (300), which receives a signal from the radio frequency identification (RFID) tag (103) to perform the signal exchange, and **characterized in that** it further comprises
- **a wear sensing system (100)** comprising said **at least one trigger mechanism (104),** which is activated, when the wear occurring in the housing (101) reaches a critical level, and further comprises **a metal needle (114)** to break the radio frequency identification tag (103) and **a metal spring (115)** to operate the needle (114).

2. Wear sensing system (100) according to Claim 1, **characterized in that** it comprises a housing (100) that ensures to attach the trigger mechanism (104) therein and the tag housing (102) thereon.

3. Wear sensing system (100) according to Claim 1, **characterized in that** it comprises a tag housing (100) that keeps the radio frequency identification (103) distant from the metal environment.

4. Wear sensing system (100) according to Claim 1, **characterized in that** it comprises a tag housing (100) that is manufactured from a material such as plastic or polyamide.

5. Wear sensing system (100) according to Claim 1, **characterized in that** it comprises a tag reader and antenna system (300) that provides a warning that the wear has reached up a critical level, when it cannot receive a signal from the radio frequency identification tag (103).

6. Wear sensing system (100) according to Claim 1, **characterized in that** it comprises a trigger mechanism (100) that ensures that the spring (115) is released and the needle (114) damages the radio frequency identification tag (103), when the wear reaches a predetermined critical level.

7. Wear sensing system (100) according to Claim 1, **characterized in that** it comprises a trigger mechanism (104) that is manufactured from a material such as metal, polyamide or castermid.

8. Wear sensing system (100) according to Claim 1, **characterized in that** it comprises a trigger mechanism (100) that is positioned in the tag housing (102) in a proper distance based on the critical wear point of the wear plate (200).

9. Wear sensing system (100) according to Claim 1, **characterized in that** the wear sensing system (100) comprises a wear plate (200) for being mounted thereon directly or through a nut.

## Patentansprüche

1. System zur Überwachung des Abnutzungszustandes von Verschleißplatten, die an der Anlage angeordnet sind und der physikalischen und mechanischen Abnutzung ausgesetzt sind, mit dem Ziel, die Lebensdauer der Anlage zu verlängern, mit den folgenden Merkmalen;
- mindestens ein Gehäuse (101), das an der Verschleißplatte (200) angebracht ist und gleichzeitig mit der Verschleißplatte (200) getragen wird,
- mindestens ein Tag-Gehäuse (102), das am Gehäuse (101) befestigt ist und die Anbringung
mindestens eines Radiofrequenzidentifikations-Tags (103) an diesem gewährleistet,
- mindestens ein Radiofrequenzidentifikations-Tag (103), das ein Signal für den Signalaustausch mit dem Tag-Lesesystem und dem Antennensystem (300) abgibt, - eine Verschleißplatte (200), die die Lebensdauer des Geräts verlängert, da sie an Geräten angebracht ist, die physischem und mechanischem Verschleiß ausgesetzt sind
- mindestens ein Tag-Lese- und Antennensystem (300), das ein Signal von dem Radiofrequenzidentifikations-Tag (103) empfängt, um den Signalaustausch durchzuführen, und **dadurch gekennzeichnet, dass** es ferner umfasst
- ein Verschleißerfassungssystem (100), das
den mindestens einen Auslösemechanismus (104) umfasst,
der aktiviert wird, wenn die im Gehäuse (101) auftretende Abnutzung ein kritisches Niveau erreicht, und das ferner eine Metallnadel (114) zum Brechen des Radiofrequenzidentifikations-Tags (103) und eine Metallfeder (115) zum Betätigen der Nadel (114) umfasst.

2. Verschleißerfassungssystem (100) nach Anspruch 1, **dadurch gekennzeichnet, dass** es ein Gehäuse (100) umfasst, das die Befestigung des Auslösemechanismus (104) darin und des Tag-Gehäuses (102) daran gewährleistet.

3. Verschleißerfassungssystem (100) nach Anspruch 1, **dadurch gekennzeichnet, dass** es ein Tag-Gehäuse (100) umfasst, das Radiofrequenzidentifikations-Tag (103) von der Metallumgebung fernhält.

4. Verschleißerfassungssystem (100) nach Anspruch 1, **dadurch gekennzeichnet, dass** es ein Tag-Gehäuse (100) umfasst, das aus einem Material wie Kunststoff oder Polyamid hergestellt ist.

5. Verschleißerfassungssystem (100) nach Anspruch 1, **dadurch gekennzeichnet, dass** es ein Tag-Lese- und Antennensystem (300) umfasst, das eine Warnung ausgibt, dass der Verschleiß ein kritisches Niveau erreicht hat, wenn es kein Signal von dem Radiofrequenzidentifikations-Tag (103) empfangen kann.

6. Verschleißerfassungssystem (100) nach Anspruch 1, **dadurch gekennzeichnet, dass** es einen Auslösemechanismus (100) umfasst, der sicherstellt, dass die Feder (115) freigegeben wird und die Nadel (114) das Radiofrequenzidentifikations-Tag (103) beschädigt, wenn der Verschleiß einen vorbestimmten kritischen Wert erreicht.

7. Verschleißerfassungssystem (100) nach Anspruch 1, **dadurch gekennzeichnet, dass** es einen Auslösemechanismus (104) umfasst, der aus einem Material wie Metall, Polyamid oder Gießereimittel hergestellt ist.

8. Verschleißerfassungssystem (100) nach Anspruch 1, **dadurch gekennzeichnet, dass** es einen Auslösemechanismus (100) umfasst, der in dem Tag-Gehäuse (102) in einem geeigneten Abstand basierend auf dem kritischen Verschleißpunkt der Verschleißplatte (200) positioniert ist.

9. Verschleißerfassungssystem (100) nach Anspruch 1, **dadurch gekennzeichnet, dass** das Verschleißerfassungssystem (100) eine Verschleißplatte (200) umfasst, die direkt oder über eine Mutter darauf montiert wird.

## Revendications

1. Système de surveillance de l'état d'usure des plaques d'usure qui sont positionnées sur l'équipement exposé à l'usure physique et mécanique et qui vise à prolonger la durée de vie de l'équipement, comprenant ce qui suit:
- au moins un boîtier (101), qui est monté sur la plaque d'usure (200) et est porté simultanément avec la plaque d'usure (200),
- au moins un boîtier d'étiquette (102), qui est fixé sur le boîtier (101) et qui assure la fixation d'au moins une étiquette d'identification radiofréquence (103) sur celui-ci,
- ladite au moins une étiquette d'identification par radiofréquence (103), émet un signal afin d'effectuer l'échange de signal avec le lecteur d'étiquette et le système d'antenne (300),
- une plaque d'usure (200) garantissant la prolongation de la durée de vie de l'équipement ainsi qu'il est monté sur les équipements exposés à une usure physique et mécanique
- au moins un lecteur d'étiquette et un système d'antenne (300), qui reçoit un signal provenant de l'étiquette d'identification par radiofréquence (RFID) (103) afin d'effectuer l'échange de signal, et **caractérisé en ce qu'**il comprend en outre
- un système de détection d'usure (100) comprenant ledit au moins un mécanisme de déclenchement (104), qui est activé lorsque l'usure se produisant dans le boîtier (101) atteint un niveau critique, et comprend en outre une aiguille métallique (114) pour briser la radio une étiquette d'identification de fréquence (103) et un ressort métallique (115) pour faire fonctionner l'aiguille (114).

2. Système de détection d'usure (100) selon la revendication 1, **caractérisé en ce qu'**il comprend un boîtier (100) qui assure la fixation du mécanisme de déclenchement (104) à l'intérieur et du boîtier d'étiquette (102) sur celui-ci.

3. Système de détection d'usure (100) selon la revendication 1, **caractérisé en ce qu'**il comprend un boîtier d'étiquette (100) qui maintient l'identification radiofréquence (103) à distance de l'environnement métallique.

4. Système de détection d'usure (100) selon la revendication 1, **caractérisé en ce qu'**il comprend un boîtier d'étiquette (100) qui est fabriqué à partir d'un matériau tel que du plastique ou du polyamide.

5. Système de détection d'usure (100) selon la revendication 1, **caractérisé en ce qu'**il comprend un lecteur d'étiquette et un système d'antenne (300) qui avertit que l'usure a atteint un niveau critique, lorsqu'il ne peut pas recevoir de signal de l'étiquette d'identification par radiofréquence (103).

6. Système de détection d'usure (100) selon la revendication 1, **caractérisé en ce qu'**il comprend un mécanisme de déclenchement (100) qui assure que le ressort (115) est libéré et que l'aiguille (114) endommage l'étiquette d'identification radiofréquence (103), lorsque le l'usure atteint un niveau critique prédéterminé.

7. Système de détection d'usure (100) selon la revendication 1, **caractérisé en ce qu'**il comprend un mécanisme de déclenchement (104) qui est fabriqué à partir d'un matériau tel que du métal, du polyamide ou du castermid.

8. Système de détection d'usure (100) selon la revendication 1, **caractérisé en ce qu'**il comprend un mécanisme de déclenchement (100) qui est positionné dans le boîtier d'étiquette (102) à une distance appropriée en fonction du point d'usure critique de la plaque d'usure (200).

9. Système de détection d'usure (100) selon la revendication 1, **caractérisé en ce que** le système de détection d'usure (100) comprend une plaque d'usure (200) destinée à être montée dessus directement ou par l'intermédiaire d'un écrou.
